(19) Europäisches Patentamt
European Patent Office
Office européen des brevets

(11) **EP 2 487 507 B1**

(12) **FASCICULE DE BREVET EUROPEEN**

(45) Date de publication et mention
de la délivrance du brevet:
**20.12.2017 Bulletin 2017/51**

(51) Int Cl.:
***G01S 19/30*** *(2010.01)*     ***H04B 1/709*** *(2011.01)*
***G01S 19/24*** *(2010.01)*

(21) Numéro de dépôt: **12154945.5**

(22) Date de dépôt: **10.02.2012**

(54) **Procédé d'acquisition avec multi-corrélation fréquentielle améliorée**

Erfassungsverfahren mit verbesserter frequenzieller Multikorrelation

Acquisition method with improved frequency multi-correlation

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.02.2011 FR 1100424**

(43) Date de publication de la demande:
**15.08.2012 Bulletin 2012/33**

(73) Titulaire: **Safran Electronics & Defense**
**92100 Boulogne-Billancourt (FR)**

(72) Inventeurs:
• **BOUVET, Denis**
**75015 PARIS (FR)**
• **LUNEAU, Ghislain**
**75015 PARIS (FR)**

(74) Mandataire: **Regimbeau**
**20, rue de Chazelles**
**75847 Paris Cedex 17 (FR)**

(56) Documents cités:
**US-A1- 2010 040 115     US-B1- 6 735 243**
**US-B1- 6 810 072**

• **AKOPIAN D: "A Fast Satellite Acquisition Method", ION GPS 2001,, 11 septembre 2001 (2001-09-11), pages 2871-2881, XP007919760,**

**Description**

Le domaine de l'invention est celui des systèmes de localisation par satellites GNSS, (« Global Navigation Satellite System »), tels que les systèmes GPS (« Global Positioning System »), Galileo ou GLONASS. L'invention se rapporte à l'acquisition de signaux issus de satellites d'un tel système de localisation par un récepteur disposant d'au moins un canal comprenant plusieurs corrélateurs en code.

L'invention s'applique aux signaux large bande à étalement de spectre, par exemple de type CDMA (en anglais « Code Division Multiple Access », à savoir un accès multiple par répartition en code) connu de l'homme du métier, typiquement mais non limitativement pour des signaux GPS/GNSS, qu'ils soient en modulation BPSK (en anglais « Binary Phase Shift Keying », à savoir une modulation binaire par déplacement de phase) ou BOC (en anglais « Binary Offset Carrier », à savoir une porteuse binaire décalée) et dérivées.

L'acquisition des signaux d'un système GNSS du type GPS, Galileo ou GLONASS consiste à aligner le signal issu d'un satellite avec un signal de réplique généré localement par le récepteur. Pour réussir cet alignement, le récepteur doit :

- Mettre en oeuvre une compensation du décalage Doppler de la porteuse du signal satellite qui est recherché par rapport à la fréquence nominale de ladite porteuse du signal satellite ; ce décalage est fonction de la vitesse apparente du satellite par rapport au récepteur et de l'écart entre la fréquence de référence théorique et la fréquence réelle fournie par l'oscillateur local du récepteur ; suivant les informations disponibles (almanach des satellites, vitesse du récepteur, vieillissement de l'oscillateur), ce décalage peut être estimé avec une incertitude plus ou moins grande.
- Décaler le code local jusqu'à ce qu'il soit aligné sur le code émis par le satellite. Cet alignement est confirmé lorsque le résultat de la corrélation, intégré sur une période plus ou moins longue, dépasse un seuil de détection, la définition de la durée d'intégration et des seuils de détection dépendant de la puissance du signal satellite reçu et de la présence et puissance des interférences.

La recherche des signaux satellites s'effectue donc dans une double dimension « temps - fréquence ». Elle est réalisée par un ou plusieurs corrélateurs, chaque corrélateur testant une hypothèse temps - fréquence en corrélant le signal reçu compensé du décalage Doppler avec le signal de réplique générée localement.

Au final, les temps d'acquisition ou de ré-acquisition des signaux GNSS dépendent :

- De la taille du domaine de recherche « temps-fréquence » du signal satellite ;
- Du nombre de corrélateurs utilisés pour la recherche ;
- Du temps nécessaire pour déterminer la présence ou l'absence du signal pour une hypothèse « temps-fréquence ».

Des techniques ont été mises au point afin de réduire les temps d'acquisition d'un signal issu d'un satellite d'un système de localisation par satellites.

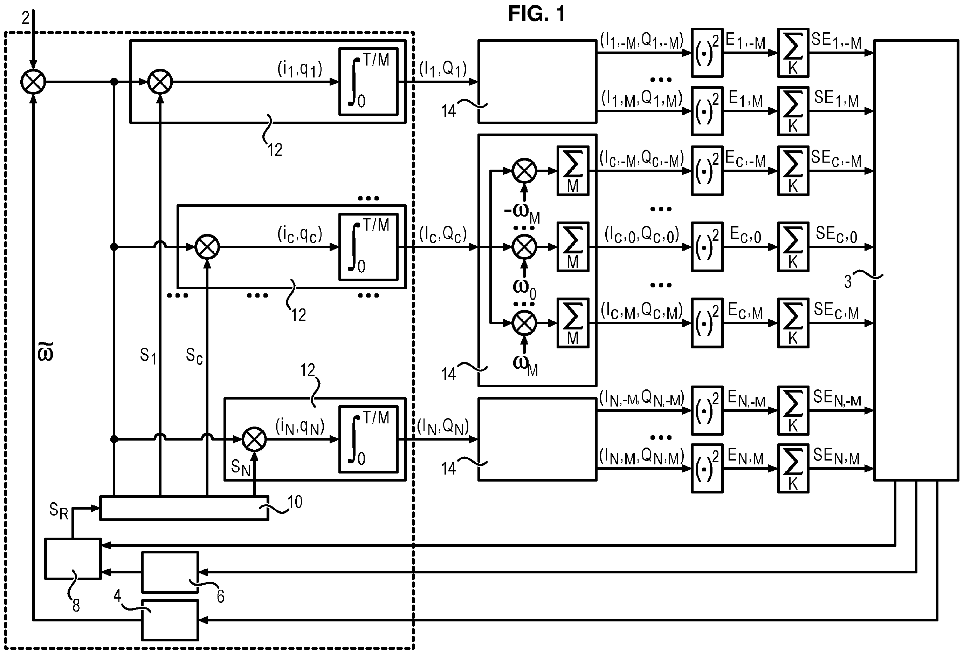

Afin d'illustrer la description suivante, référence sera faite à la figure 1 qui est un schéma de principe d'un canal d'un récepteur d'un système de localisation par satellite mettant en oeuvre une multi-corrélation en code et multi-corrélation en fréquence.

Un récepteur GNSS dispose de plusieurs canaux lui permettant d'acquérir puis de poursuivre simultanément plusieurs satellites. Un premier axe de réduction des temps d'acquisition est d'augmenter le nombre de corrélateurs en code 12 par canal, en introduisant un registre à décalage 10 qui permet de générer plusieurs signaux de réplique $S_1$, $S_c$, $S_N$, par exemple N signaux de répliques, décalées de $\alpha$ moments du code (classiquement $\alpha$ = 1/2), ce qui permet de tester simultanément autant d'hypothèses de code pour une fréquence donnée, soit N hypothèses : on parle alors de multi-corrélation en code.

Le nombre de corrélateurs peut encore être étendu par traitement fréquentiel des résultats sortant des corrélateurs en code 12 : on parle alors de multi-corrélation en fréquence post-détection, puisque le traitement fréquentiel est opéré sur la sortie des résultats de multicorrélation en code, contrairement aux architectures présentées par exemple dans l'article « A Fast Satellite Acquisition Method » de David Akopian présenté à l'ION GPS 2001, 11-14 Septembre 2001, Salt Lake City.

Elle peut se décomposer comme suit :

- échantillonnage des résultats de corrélation à la période T/M
- convolution à l'aide de corrélateurs augmentés en fréquence 14, des sorties des corrélateurs en code avec des porteuses décalées par rapport à la fréquence centrale de $\omega_m = m / (aT)$ avec $m \in [-M ; +M]$
- sommation de M échantillons pour reconstituer les sorties complexes (I,Q) sur la période d'intégration cohérente T

Pour chaque corrélateur en code 12, on obtient ainsi les sorties complexes (I,Q) de 2M+1 corrélateurs augmentés en fréquence 14 décalés par pas de m / (aT) autour d'une fréquence centrale qui est la fréquence nominale de la porteuse corrigée du décalage Doppler.

Avec ce mécanisme de multi-corrélation en code et fréquence post-détection, le domaine de recherche en temps - fréquence est balayé en testant simultanément les sorties de N × (2M+1) corrélateurs augmentés en fréquence 14, ce qui permet de réduire les temps d'acquisition ou de ré-acquisition des signaux satellites.

Cependant, la mise en oeuvre de la multicorrélation en fréquence post-détection présente l'inconvénient que la vitesse de génération du code du signal de réplique est proportionnelle d'un facteur f à la fréquence nominale de la porteuse compensée du décalage Doppler, mais pas aux porteuses décalées de $\omega_m$ par rapport à cette référence.

Par exemple, les satellites du système GPS émettent au minimum sur deux porteuses L1 = 1575,42 MHz et L2 = 1227,6 MHz. La phase de la porteuse L1 est modulée par un premier code d'étalement dit C/A (« Coarse Acquisition » pour acquisition grossière) et le message de navigation, et en quadrature, par un second code d'étalement crypté dit P(Y) et le message de navigation. La phase de la porteuse L2 est au minimum modulée par le code d'étalement P(Y) et le message de navigation. Le code C/A a un débit de 1,023 x $10^6$ bits ou moments par seconde tandis que le code P(Y) a un débit de 10,23 x $10^6$ bits ou moments par seconde.

Le facteur d'échelle f est donc typiquement de 1/1540 pour le code C/A sur la porteuse L1, 1/154 pour le code P(Y) sur la porteuse L1 et 1/120 pour le code P(Y) sur la porteuse L2. Il en résulte que les conséquences d'une compensation du décalage Doppler non adaptée seront plus importantes pour l'acquisition du code P(Y) que pour l'acquisition du code C/A.

La vitesse de génération du signal de réplique $S_r$ est cohérente de la fréquence nominale de la porteuse compensée du décalage Doppler. En revanche, la vitesse de génération du signal de réplique $S_r$ n'est pas cohérente des porteuses décalées de $\omega_m$ par rapport à cette fréquence centrale.

Cette incohérence n'est pas gênante tant que l'intégration des sorties des corrélateurs augmentés est de courte durée. Par contre, en présence d'interférences ou de brouilleurs, le rapport signal sur densité de bruit $C/N_0$ chute et les durées d'intégration $T_i$ doivent être plus longues pour déterminer la présence ou l'absence de signal pour une hypothèse code - fréquence donnée et cette incohérence devient problématique.

Ainsi, si l'on considère l'acquisition des signaux GPS P(Y) sur la porteuse L1, pour un décalage en fréquence de $\omega_m$ Hz, l'erreur sur la vitesse de génération du code est de $\omega_m$ / 154 moments de code par seconde. Cette erreur génère alors avec le temps un glissement de code, c'est-à-dire un décalage progressif du code généré par rapport au code du signal. Il s'agit d'une erreur induite par le décalage par rapport à la fréquence centrale des porteuses décalées en fréquence utilisées dans les corrélateurs augmentés en fréquence 14.

En prenant un espacement entre corrélateurs en code 12 de un demi moment de code, si la durée d'intégration pour un premier corrélateur augmenté en fréquence 14, associé à un premier corrélateur en code 12 et décalé de $\omega_m$, excède $T_i > 77 / \omega_m$, le signal se sera déplacé sur un second corrélateur augmenté en fréquence 14 exploitant le même décalage en fréquence que le premier corrélateur augmenté en fréquence 14 et étant associé à un second corrélateur en code 12 qui est décalé de l'espacement en code dudit premier corrélateur en code 12 auquel est associé ledit premier corrélateur augmenté en fréquence 14.

Si rien n'est fait pour corriger les effets de cette erreur induite par le décalage par rapport à la fréquence centrale des porteuses décalées en fréquence utilisées dans les corrélateurs augmentés en fréquence 14, les N corrélateurs augmentés en fréquence 14 dont le décalage en fréquence est tel que $|\omega_m| > 77 / T_i$ deviennent inutilisables et l'acquisition du signal sera plus longue du fait du nombre réduit de corrélateurs augmentés en fréquence 14 utiles.

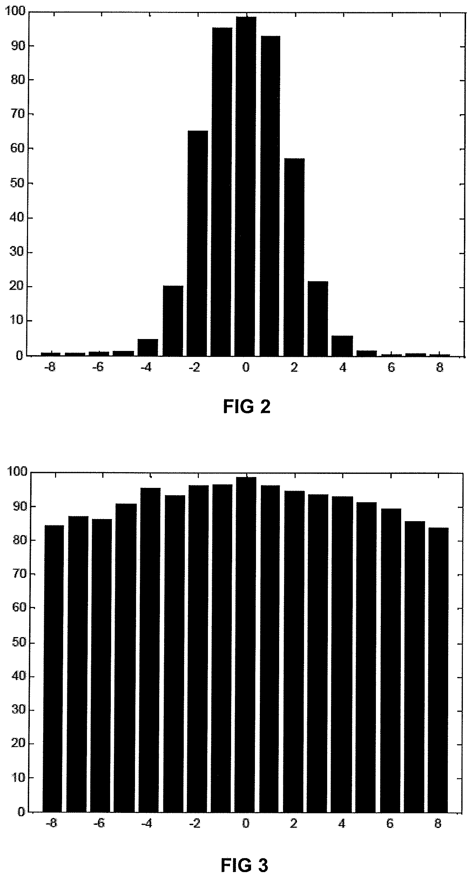

La figure 2 illustre un exemple de probabilités de détection du signal (en %) en fonction de l'indice m du décalage en fréquence entre la fréquence centrale avec lequel la vitesse de génération de code est cohérente et la fréquence réelle du signal recherché. Cette figure montre les conséquences de l'absence de compensation de l'erreur induite pour une acquisition des signaux P(Y) sur L1 à faible rapport signal sur bruit. Dans ce cas, la durée d'intégration nécessaire est de l'ordre de plusieurs secondes, et pour les décalages en fréquence significatifs, l'erreur induite dépasse le demi-moment de code P(Y) et les résultats d'intégration sont invalides : pratiquement aucune détection n'est possible pour ces corrélateurs augmentés en fréquence 14.

Par conséquent, la durée d'acquisition du signal satellite peut s'en trouver sensiblement allongée en raison du nombre restreint de corrélateurs utiles.

L'invention a pour but de réduire la durée d'acquisition du signal satellite, et propose pour ce faire de corriger les conséquences de l'erreur induite par le décalage par rapport à la fréquence centrale des porteuses décalées en fréquence utilisées dans les corrélateurs augmentés en fréquence 14.

A cet effet, l'invention prévoit, selon un premier aspect, un procédé d'acquisition d'un signal 2 émis par un satellite par un récepteur d'un système de localisation par satellites disposant de plusieurs canaux comprenant chacun plusieurs corrélateurs en code 12 auxquels sont associés des corrélateurs augmentés en fréquence 14, le procédé comprenant les étapes selon lesquelles :

- on réalise, au moyen des corrélateurs en code 12 d'un canal, une multi-corrélation en code du signal reçu avec des signaux de réplique successivement décalés en code les uns des autres d'un espacement en code,

- on réalise, au moyen des corrélateurs augmentés en fréquence 14 associés à un corrélateur en code 12, une multi-corrélation en fréquence du résultat de corrélation du corrélateur en code 12 avec des porteuses décalées en fréquence par rapport à une fréquence centrale cohérente de la vitesse de génération du signal de réplique du corrélateur en code 12, une erreur étant induite en sortie de chaque corrélateur augmenté en fréquence 14 qui est fonction du décalage par rapport à la fréquence centrale et de la durée pendant laquelle sont intégrés les résultats de la multi-corrélation en fréquence,

le procédé étant caractérisé en ce qu'il comporte en outre les étapes selon lesquelles:

- on somme, à plusieurs instants au cours d'une période d'intégration $T_i$ des résultats successifs de la multi-corrélation en fréquence, les résultats de chaque corrélateur augmenté en fréquence 14,
- à chacun de ces instants, si l'erreur induite en sortie d'un premier corrélateur augmenté en fréquence 14 exprimée en tant que nombre entier d'espacement en code entre corrélateurs en code 12 a augmenté par rapport à l'erreur induite exprimée en tant que nombre entier d'espacements en code entre corrélateurs en code 12 en sortie du même corrélateur augmenté en fréquence 14 valable à l'instant précédent, on transfère les résultats sommés du premier corrélateur augmenté en fréquence 14 aux résultats sommés d'un second corrélateur augmenté en fréquence 14, le second corrélateur augmenté en fréquence 14 exploitant le même décalage en fréquence que le premier corrélateur augmenté en fréquence 14 et étant associé à un second corrélateur en code 12 qui est décalé de l'espacement en code du premier corrélateur en code 12 auquel est associé ledit premier corrélateur augmenté en fréquence 14.

Certains aspects préférés mais non limitatifs de procédé sont les suivants :

- le transfert des résultats sommés du corrélateur augmenté en fréquence 14, associé au premier corrélateur en code 12, au second corrélateur augmenté en fréquence 14, associé au second corrélateur en code 12, est réalisé suivant le signe du décalage en fréquence du premier corrélateur augmenté en fréquence 14 par rapport à la fréquence centrale;
- le procédé est mis en oeuvre sur un méta-canal constitué d'une pluralité de canaux en parallèle et mettant en oeuvre une multi-corrélation en code avec les corrélateurs en code 12 de ladite pluralité de canaux et une multi-corrélation en fréquence avec les corrélateurs augmentés en fréquence 14 associés auxdits corrélateurs en code 12;
- les instants de sommation des résultats successifs de chaque corrélateur augmenté en fréquence 14 sont choisis à une fréquence inverse de la période d'échantillonnage T des sorties des corrélateurs augmentés en fréquence 14;
- le procédé comprend, à chacun desdits instants, la détermination de l'erreur induite, ladite détermination et le transfert des résultats sommés étant mis en oeuvre en parallèle pour des corrélateurs augmentés en fréquence 14 décalés respectivement de -$\omega_m$ et $\omega_m$ par rapport à la fréquence centrale;

- le décalage en fréquence des porteuses par rapport à la fréquence centrale est de $\omega_m = \dfrac{m}{aT}$ avec $m \in [-M;M]$,

où a et T sont des réels et M et m sont des entiers, et dans lequel :

- les résultats de la corrélation par les corrélateurs en code 12 sont échantillonnés à une période $T/M$,
- la sortie d'un corrélateur augmenté en fréquence 14 correspond à la somme de M échantillons d'une convolution entre la sortie du corrélateur en code 12 auquel le corrélateur augmenté en fréquence 14 est associé et la porteuse décalée en fréquence par rapport à la fréquence centrale;
- l'erreur induite exprimée en moment de code d'étalement est déterminée à un instant nT selon :

$$erreur\ induite\ (nT) = \frac{nT|\omega_m|}{f}$$

avec n incrément d'intégration tel que n entier naturel, et f facteur d'échelle du signal défini par

$$f = \frac{d\acute{e}bit\ de\ transmission\ du\ code\ d'\acute{e}talement\ du\ signal\ satellite\ (moments\,/\,s)}{fr\acute{e}quence\ de\ l'onde\ porteuse\ du\ signal\ satellite\ (Hz)}$$

- le procédé comprend une compensation du décalage doppler mise en oeuvre pour la fréquence nominale de la porteuse du signal satellite, ladite fréquence nominale compensée correspondant à ladite fréquence centrale;
- le système de localisation par satellite peut par exemple être le système de positionnement mondial GPS, la porteuse dudit signal issu d'un satellite pouvant être les porteuses dites L1 ou L2 de fréquence respective 1575,42 MHz et 1227,6 MHz, ledit signal étant modulé en phase par un code d'étalement qui peut être le code C/A ou le code P(Y);

Selon un second aspect, l'invention concerne également un récepteur d'un système de localisation par satellites disposant de plusieurs canaux comprenant chacun plusieurs corrélateurs 12, 14, lesdits canaux comprenant au moins un générateur de réplique de code 8, un registre à décalage 10 et un module d'acquisition 3 pour commander la compensation du décalage Doppler, ledit récepteur étant en outre configuré pour mettre en oeuvre le procédé selon le premier aspect de l'invention.

La figure 1 est un schéma de principe d'un canal d'un récepteur d'un système de localisation par satellite mettant en oeuvre une multi-corrélation en code et une multi-corrélation en fréquence.
La figure 2 est un graphique illustrant les probabilités de détection d'un signal en fonction de l'indice du décalage en fréquence des porteuses utilisées dans les corrélateurs augmentés en fréquence sans application du procédé selon l'invention.
La figure 3 est un graphique illustrant les probabilités de détection d'un signal en fonction de l'indice du décalage en fréquence des porteuses utilisées dans les corrélateurs augmentés en fréquence avec application du procédé selon l'invention, dans les mêmes conditions que celles de la figure 2.

Un procédé d'acquisition d'un signal émis par un satellite par un récepteur d'un système de localisation par satellites disposant de plusieurs canaux comprenant chacun plusieurs corrélateurs en code 12 auxquels sont associés des corrélateurs augmentés en fréquence 14, conforme à un premier aspect de l'invention est décrit dans la suite. Un récepteur selon le second aspect de l'invention sera également décrit. A titre d'exemple non limitatif, le procédé d'acquisition et le récepteur seront décrits dans le cadre du système GPS.
Le procédé d'acquisition met en oeuvre

- une multi-corrélation en code au moyen des corrélateurs en code 12 d'un canal. Cette multi-corrélation en code utilise des signaux de réplique $S_1$, $S_c$, $S_N$ successivement décalés en code les uns des autres d'un espacement en code $\alpha$.
- une multi-corrélation en fréquence au moyen des corrélateurs augmentés en fréquence 14 associés à un corrélateur en code 12. Cette multi-corrélation en fréquence utilise des porteuses décalées en fréquence par rapport à une fréquence centrale cohérente de la vitesse de génération du signal de réplique $S_r$ du corrélateur en code.

En référence à la figure 1, un signal reçu 2 est un signal émis par un satellite d'un système de localisation par satellites. Le décalage Doppler de ce signal reçu 2 est compensé par une porteuse à une fréquence de compensation $\tilde{\omega}$, ladite porteuse étant issue d'un oscillateur contrôlé de porteuse 4 commandé par un module d'acquisition 3. Ce module d'acquisition 3 commande également l'oscillateur contrôlé de code 6 pour commander la vitesse de génération du code du signal de réplique par un générateur du signal de réplique 8. Le générateur du signal de réplique 8 génère un signal de réplique $S_r$ en fonction de l'information du code sélectionné fournie par le module d'acquisition 3 et en fonction de la commande de la vitesse de génération dudit code.
Le signal de réplique $S_R$ est ensuite décalé d'un espacement en code $\alpha$ par un registre à décalage 10, puis les signaux de réplique ainsi décalés $S_1$, $S_c$, $S_N$ sont transmis aux corrélateurs en code 12 qui mettent en oeuvre la multi-corrélation en code.
Les sorties (I,Q) des corrélateurs en code 12 sont ensuite transmises à des corrélateurs augmentés en fréquence 14 qui mettent en oeuvre une multi-corrélation en fréquence. Les sommes quadratiques des composantes des sorties des corrélateurs augmentés en fréquence 14 peuvent ensuite être calculées. Les résultats de ces opérations sont sommés sur une durée d'intégration $T_i=KT$, avec K nombre d'itérations et T période d'échantillonnage des sorties des corrélateurs augmentés en fréquence 14.
Lorsqu'un de ces résultats sommés dépasse un seuil de détection, cela indique la détection d'un signal et donc la validité de l'hypothèse temps-fréquence correspondant au décalage en code et en fréquence mis en oeuvre pour obtenir ce résultat sommé. Le décalage en code et le décalage en fréquence ainsi déterminés seront utilisés pour initialiser la poursuite du signal détecté.
Afin de balayer le domaine fréquentiel d'incertitude $\Delta\omega$ de la compensation du décalage Doppler, il est préférable de diviser ce domaine $\Delta\omega$ en 2M+1 hypothèses de fréquence pour déterminer le décalage à appliquer aux porteuses. Ainsi, le décalage en fréquence des porteuses par rapport à la fréquence centrale peut être choisi comme étant:

$$\omega_m = \frac{m}{aT}$$ avec $m \in [-M;M]$, où a et T sont des réels et M et m sont des entiers.

En outre, afin de mettre en oeuvre cette multi-corrélation en fréquence, les résultats de la corrélation par les corrélateurs en code 12 sont échantillonnés à une période $T/M$, et la sortie d'un corrélateur augmenté en fréquence 14 correspond à la somme de M échantillons d'une convolution entre la sortie du corrélateur en code 12 auquel le corrélateur augmenté en fréquence 14 est associé et la porteuse décalée en fréquence par rapport à la fréquence centrale.

Il ne s'agit que d'un exemple non limitatif, d'autres décalages peuvent être choisis.

Le décalage des porteuses par rapport à la fréquence centrale induit une erreur due à la non cohérence de la fréquence de ces porteuses par rapport à la vitesse de génération du signal de réplique mis en oeuvre dans le corrélateur en code 12, ledit signal de réplique étant cohérent de la fréquence centrale. Cette fréquence centrale correspond à la fréquence nominale de la porteuse du signal satellite 2 à laquelle est appliquée une compensation du décalage Doppler.

Cette erreur induite en sortie de chaque corrélateur augmenté en fréquence 14 est fonction du décalage par rapport à la fréquence centrale et de la durée pendant laquelle sont intégrés les résultats de la multi-corrélation en fréquence.

A plusieurs instants au cours d'une période d'intégration des résultats de la multi-corrélation en fréquence, les résultats de chaque corrélateur augmenté en fréquence sont sommés. Ces instants sont de préférence régulièrement espacés d'une période d'échantillonnage T des sorties des corrélateurs augmentés en fréquence 14.

En prenant l'exemple d'un premier corrélateur augmenté en fréquence 14, qui sera noté $CAF_{c,m}$, associé au $c^{\text{ème}}$ corrélateur en code dont m est l'indice de décalage de la fréquence de sa porteuse; à chacun des instants d'une période d'intégration $T_i$ des résultats de la corrélation de ce corrélateur augmenté en fréquence 14 $CAF_{c,m}$, on détermine l'erreur induite. L'erreur induite est notamment fonction du décalage par rapport à la fréquence centrale et de la durée pendant laquelle sont intégrés les résultats de la multi-corrélation en fréquence. Ainsi, à l'instant n x T, l'erreur induite exprimée en moments de code peut être déterminée selon :

$$erreur\ induite\ (nT) = \frac{nT|\omega_m|}{f}$$

avec n incrément d'intégration tel que n entier naturel, et f facteur d'échelle du signal.

Il ne s'agit que d'un exemple non limitatif, d'autres méthodes de détermination de l'erreur induite peuvent être choisies. La détermination de l'erreur induite dépend notamment du choix des décalages appliqués aux porteuses mises en oeuvre dans les corrélateurs augmentés en fréquence 14.

L'erreur induite, une fois déterminée, est comparée à l'espacement en code $\alpha$ entre les corrélateurs en code 12. On cherche donc à déterminer la valeur de l'erreur induite exprimée en tant que nombre entier d'espacements en code entre corrélateurs en code 12, ce qui revient à retenir la partie entière de la division de l'erreur induite, préalablement déterminée, par l'espacement en code entre corrélateurs $\alpha$:

$$E\left(\frac{erreur\ induite\ (nT)}{\alpha}\right) = E\left(\frac{nT|\omega_m|}{f}\frac{1}{\alpha}\right)$$

Si l'erreur induite exprimée en tant que nombre entier d'espacements en code entre corrélateurs en code 12 augmente entre deux incréments d'intégration consécutifs $(n-1)$ x T et n x T, les résultats sommés sont transférés du premier corrélateur augmenté en fréquence 14 $CAF_{c,m}$ vers un second corrélateur augmenté en fréquence 14 $CAF_{c-1,m}$ ou $CAF_{c+1,m}$, le second corrélateur augmenté en fréquence 14 $CAF_{c-1,m}$ ou $CAF_{c+1,m}$ exploitant le même décalage en fréquence que le premier corrélateur augmenté en fréquence 14 $CAF_{c,m}$, donc partageant un même indice m, et étant associé à un second corrélateur en code 12 qui est décalé de l'espacement en code du premier corrélateur 12 auquel est associé ledit premier corrélateur augmenté en fréquence 14, c'est-à-dire que le second corrélateur en code 12 sera le $c-1^{\text{ème}}$ ou le $c+1^{\text{ème}}$.

En outre, le transfert des résultats sommés du premier corrélateur augmenté en fréquence 14 $CAF_{c,m}$ associé au $c^{\text{ème}}$ corrélateur en code 12 au second corrélateur augmenté en fréquence 14 $CAF_{c-1,m}$ ou $CAF_{c+1,m}$ associé au $c-1^{\text{ème}}$ ou $c+1^{\text{èm}}$ corrélateur en code 12 est réalisé suivant le signe du décalage en fréquence du premier corrélateur augmenté en fréquence 14 $CAF_{c,m}$ par rapport à la fréquence centrale, ce qui détermine le second corrélateur augmenté en fréquence 14 $CAF_{c-1,m}$ ou $CAF_{c+1,m}$ par rapport au premier corrélateur augmenté en fréquence 14 $CAF_{c,m}$.

L'erreur induite est fonction de la valeur absolue du décalage en fréquence $\omega_m$. Par conséquent, afin d'accélérer les calculs, la détermination de l'erreur induite et le transfert des résultats sommés peuvent être mis en oeuvre en parallèle pour des corrélateurs augmentés en fréquence 14 décalés respectivement de $\omega_m$ et - $\omega_m$ par rapport à la fréquence centrale.

Un exemple d'instructions permettant de mettre en oeuvre l'invention est donné ci-après sous forme de pseudo-code, c'est-à-dire sans référence à un langage de programmation particulier. Pour cet exemple, $I_{c,m}$ et $Q_{c,m}$ sont les deux composantes de la sortie d'un corrélateur augmenté en fréquence 14 décalé d'une fréquence $\omega_m$ associé au c$^{ème}$ corrélateur en code 12 d'un canal, décalé de c-1 espacements en code du premier corrélateur en code 12 du canal. Les indices des autres termes sont construits sur les mêmes principes. La somme des résultats est notée SE, N désigne le nombre total de corrélateurs en code 12 du canal, n est l'incrément, et K est le nombre maximal d'itérations, tel que $T_i$=KT, avec T période d'échantillonnage des sorties des corrélateurs augmentés en fréquence et $T_i$ période d'intégration totale.

```
TANT QUE n≤K FAIRE

        Ec,m = Ic,m² + Qc,m²

        n=n+1

        SI (E(n x T x |ωm|/(f x α)) = E((n-1) x T x |ωm|/(f x α))) ALORS

                SEc,m = SEc,m + Ec,m


        SINON

                SI ωm<0 ALORS

                        SI c>1 ALORS

                                SEc-1,m = SEc,m + Ec,m

                        SINON

                                SEc,m = Ec,m

                        FIN SI

                FIN SI

                SI ωm>0 ALORS

                        SI c<N ALORS

                                SEc,m = SEc+1,m + Ec,m

                        SINON

                                SEc,m = Ec,m

                        FIN SI

                FIN SI

        FIN SI

FIN TANT QUE
```

La figure 3 représente les résultats du procédé appliqué à la situation de la figure 2 où l'on tente l'acquisition du signal fortement brouillé et nécessitant une durée d'intégration $T_i$ longue. On constate que les décalages en fréquence les plus extrêmes sont de nouveau exploitables.

Néanmoins, avec la mise en oeuvre du procédé sur un seul canal, c'est-à-dire une compensation intra-canal des conséquences de l'erreur induite, on perd $E(T_i \times |\omega_m|/(f \times \alpha))$ corrélateurs pour un décalage en fréquence $\omega_m$ donné du fait des transferts successifs des accumulations d'énergie au corrélateur augmenté en fréquence 14 exploitant le même décalage en fréquence et associé à un corrélateur en code 12 voisin. La conséquence est que le domaine de recherche est balayé par seulement $(N\text{-}max(E(T_i \times |\omega_m| / f / \alpha))) \times (2M+1)$ corrélateurs augmentés en fréquence 14.

Pour corriger cet effet, on met avantageusement en oeuvre une compensation entre canaux, c'est-à-dire une compensation inter-canal des conséquences de l'erreur induite. En réalisant la recherche d'un signal donné par une pluralité de canaux en parallèle, avec des commandes de compensation du décalage Doppler et de vitesse de génération du code identiques, on utilise un méta-canal constitué d'une pluralité de canaux. Ce méta-canal met en oeuvre une multi-corrélation en code avec les corrélateurs en code 12 de ladite pluralité de canaux et une multi-corrélation en fréquence avec les corrélateurs augmentés en fréquence 14 associés auxdits corrélateurs en code 12.

En particulier, il en résulte que les corrélateurs en code 12 de ladite pluralité de canaux constituant le méta-canal réalisent une multi-corrélation en code du signal reçu avec des signaux de réplique $S_1$, $S_c$, $S_N$ successivement décalés en code les uns des autres d'un espacement en code, de façon à ce que leurs domaines de corrélations soient adjacents.

Le procédé est donc mis en oeuvre d'une façon similaire sur un méta-canal que sur un canal. La perte relative de corrélateurs augmentés en fréquence 14 utiles est moindre, et l'architecture de multi-corrélation en code et en fréquence est alors optimale pour réduire les temps d'acquisition de signaux faibles ou brouillés.

L'invention a également pour objet un récepteur d'un système de localisation par satellites disposant de plusieurs canaux comprenant chacun plusieurs corrélateurs en code 12, lesdits canaux comprenant au moins un générateur de signal de réplique 8, un registre à décalage 10, un module d'acquisition 3 pour commander la compensation du décalage Doppler, ledit récepteur étant en outre configuré pour mettre en oeuvre le procédé selon l'invention décrit plus haut.

L'architecture de multicorrélation en code et en fréquence permet d'augmenter le nombre d'hypothèses code - fréquence testées simultanément et donc de réduire les temps d'acquisition des signaux GNSS, qu'ils soient de type GPS, Galileo, Glonass ou autre. Ce gain est toutefois limité dès que les durées d'intégration s'allongent pour permettre l'acquisition de signaux faibles ou brouillés.

Grâce à la compensation de l'erreur induite intra-canal et inter-canal, cette limitation est levée et il devient possible d'acquérir des signaux GNSS avec des rapports signal sur densité de bruit très faibles tout en exploitant à sa pleine capacité une architecture de multicorrélateurs en code et en fréquence.

**Revendications**

1. Procédé d'acquisition d'un signal émis par un satellite par un récepteur d'un système de localisation par satellites GNSS disposant de plusieurs canaux comprenant chacun plusieurs corrélateurs en code (12) auxquels sont associés des corrélateurs augmentés en fréquence (14),
le procédé comprenant les étapes selon lesquelles :

   - on réalise, au moyen des corrélateurs en code (12) d'un canal, une multi-corrélation en code du signal reçu (2) avec des signaux de réplique successivement décalés en code les uns des autres d'un espacement en code,
   - on réalise, au moyen des corrélateurs augmentés en fréquence (14) associés à un corrélateur en code (12), une multi-corrélation en fréquence du résultat de corrélation du corrélateur en code (12) avec des porteuses décalées en fréquence par rapport à une fréquence centrale cohérente de la vitesse de génération du signal de réplique du corrélateur en code (12), une erreur étant induite en sortie de chaque corrélateur augmenté en fréquence (14) qui est fonction du décalage par rapport à la fréquence centrale et de la durée pendant laquelle sont intégrés les résultats de la multi-corrélation en fréquence,

   le procédé étant **caractérisé en ce qu'**il comporte en outre les étapes selon lesquelles:

   - on somme, à plusieurs instants au cours d'une période d'intégration des résultats de la multi-corrélation en fréquence, les résultats successifs de chaque corrélateur augmenté en fréquence (14),
   - à chacun de ces instants, si l'erreur induite en sortie d'un premier corrélateur augmenté en fréquence (14) exprimée en tant que nombre entier d'espacements en code entre corrélateurs en code (12) a augmenté par rapport à l'erreur induite exprimée en tant que nombre entier d'espacements en code entre corrélateurs en code (12) en sortie du même corrélateur (14) valable à l'instant précédent, on transfère les résultats sommés du premier corrélateur augmenté en fréquence (14) aux résultats sommés d'un second corrélateur augmenté en fréquence (14), le second corrélateur augmenté en fréquence (14) exploitant le même décalage en fréquence que le premier corrélateur augmenté en fréquence (14) et étant associé à un second corrélateur en code (12) qui est décalé de l'espacement en code du premier corrélateur en code (12) auquel est associé ledit premier corrélateur augmenté en fréquence (14).

**2.** Procédé d'acquisition selon la revendication 1, dans lequel le transfert des résultats sommés du premier corrélateur augmenté en fréquence (14), associé au premier corrélateur en code (12), au second corrélateur augmenté en fréquence (14), associé au second corrélateur en code (12), est réalisé suivant le signe du décalage en fréquence du premier corrélateur augmenté en fréquence (14) par rapport à la fréquence centrale.

**3.** Procédé d'acquisition selon l'une quelconque des revendications précédentes, **caractérisé en ce qu'**il est mis en oeuvre sur un méta-canal constitué d'une pluralité de canaux en parallèle et mettant en oeuvre une multi-corrélation en code avec les corrélateurs en code (12) de ladite pluralité de canaux et une multi-corrélation en fréquence avec les corrélateurs augmentés en fréquence (14) associés auxdits corrélateurs en code (12).

**4.** Procédé d'acquisition selon l'une quelconque des revendications précédentes, **caractérisé en ce que** les instants de sommation des résultats successifs de chaque corrélateur augmenté en fréquence (14) sont choisis à une fréquence inverse de la période d'échantillonnage T des sorties des corrélateurs augmentés en fréquence (14).

**5.** Procédé d'acquisition selon l'une quelconque des revendications précédentes, comprenant, à chacun desdits instants, la détermination de l'erreur induite, ladite détermination et le transfert des résultats sommés étant mis en oeuvre en parallèle pour des corrélateurs augmentés en fréquence (14) décalés respectivement de $\omega_m$ et $-\omega_m$ par rapport à la fréquence centrale.

**6.** Procédé d'acquisition selon l'une quelconque des revendications précédentes, dans lequel le décalage en fréquence des porteuses par rapport à la fréquence centrale est de $\omega_m = \dfrac{m}{aT}$ avec $m \in [-M;M]$, où a et T sont des réels et M et m sont des entiers, et dans lequel :

- les résultats de la corrélation par les corrélateurs en code (12) sont échantillonnés à une période *T/M*,
- la sortie d'un corrélateur augmenté en fréquence (14) correspond à la somme de M échantillons d'une convolution entre la sortie du corrélateur en code (12) auquel le corrélateur augmenté en fréquence (14) est associé et la porteuse décalée en fréquence par rapport à la fréquence centrale.

**7.** Procédé d'acquisition selon la revendication précédente, dans lequel l'erreur induite est déterminée à un instant n x T selon :

$$erreur\ induite(nT) = \frac{nT|\omega_m|}{f}$$

avec *n* incrément d'intégration tel que *n* entier naturel, et *f* facteur d'échelle du signal défini par

$$f = \frac{d\acute{e}bit\ de\ transmission\ du\ code\ d'\acute{e}talement\ du\ signal\ satellite\ (moments\,/\,s)}{fr\acute{e}quence\ de\ l'onde\ porteuse\ du\ signal\ satellite\ (Hz)}$$

**8.** Procédé d'acquisition selon l'une quelconque des revendications précédentes, comprenant une compensation du décalage Doppler mise en oeuvre pour la fréquence nominale de la porteuse du signal satellite, ladite fréquence nominale compensée correspondant à ladite fréquence centrale.

**9.** Procédé d'acquisition selon l'une quelconque des revendications précédentes, **caractérisée en ce que** le système de localisation par satellite est le système de positionnement mondial GPS, la porteuse dudit signal issu d'un satellite pouvant être les porteuses dites L1 ou L2 de fréquence respective 1575,42 MHz et 1227,6 MHz, ledit signal étant modulé en phase par un code d'étalement qui peut être le code C/A ou le code P(Y).

**10.** Récepteur d'un système de localisation par satellites disposant de plusieurs canaux comprenant chacun plusieurs corrélateurs (12, 14), lesdits canaux comprenant au moins un générateur de réplique de code (8), un registre à décalage (10), un module d'acquisition (3) pour commander la compensation du décalage Doppler, ledit récepteur étant en outre configuré pour mettre en oeuvre le procédé selon l'une quelconque des revendications précédentes.

**Patentansprüche**

1. Verfahren zum Erfassen eines von einem Satelliten gesendeten Signals durch einen Empfänger eines Satellitenortungssystems GNSS, der über mehrere Kanäle verfügt, die jeder mehrere Codekorrelatoren (12) umfassen, denen frequenzerweiterte Korrelatoren (14) zugeordnet sind, wobei das Verfahren die Schritte umfasst, gemäß denen:

   - mittels der Codekorrelatoren (12) eines Kanals eine Code-Multikorrelation des empfangenen Signals (2) mit Replikatsignalen ausgeführt wird, die aufeinanderfolgend um einem Coderaum zueinander codeverschoben sind,
   - mittels der frequenzerweiterten Korrelatoren (14), die einem Codekorrelator (12) zugeordnet sind, eine Frequenz-Multikorrelation des Korrelationsergebnisses des Codekorrelators (12) mit Trägern ausgeführt wird, die in Bezug auf eine Mittenfrequenz, die mit der Erzeugungsgeschwindigkeit des Replikatsignals des Codekorrelators (12) kohärent ist, frequenzverschoben sind, wobei am Ausgang jedes frequenzerweiterten Korrelators (14) ein Fehler induziert wird, der von der Verschiebung in Bezug auf die Mittenfrequenz und der Dauer, während der die Ergebnisse der Frequenz-Multikorrelation integriert werden, abhängig ist,

   wobei das Verfahren **dadurch gekennzeichnet ist, dass** es weiter die Schritte umfasst, gemäß denen:

   - zu mehreren Zeitpunkten im Laufe eines Integrationszeitraums der Ergebnisse der Frequenz-Multikorrelation die aufeinanderfolgenden Ergebnisse jedes frequenzerweiterten Korrelators (14) summiert werden,
   - zu jedem dieser Zeitpunkte, wenn der induzierte Fehler am Ausgang eines ersten frequenzerweiterten Korrelators (14), als ganze Zahl von Coderäumen zwischen Codekorrelatoren (12) ausgedrückt, in Bezug auf den induzierten Fehler, ausgedrückt als ganze Zahl von Coderäumen zwischen Codekorrelatoren (12) am Ausgang des gleichen Korrelators (14), der zum vorhergehenden Zeitpunkt gültig war, zugenommen hat, die summierten Ergebnisse des ersten frequenzerweiterten Korrelators (14) auf die summierten Ergebnisse eines zweiten frequenzerweiterten Korrelators (14) übertragen werden, wobei der zweite frequenzerweiterte Korrelator (14) die gleiche Frequenzverschiebung nutzt wie der erste frequenzerweiterte Korrelator (14) und einem zweiten Codekorrelator (12) zugeordnet ist, der um den Coderaum des ersten Codekorrelators (12), dem der erste frequenzerweiterte Codekorrelator (14) zugeordnet ist, verschoben ist.

2. Erfassungsverfahren nach Anspruch 1, wobei die Übertragung der summierten Ergebnisse des ersten frequenzerweiterten Korrelators (14), der dem ersten Codekorrelator (12) zugeordnet ist, auf den zweiten frequenzerweiterten Korrelator (14), der dem zweiten Codekorrelator (12) zugeordnet ist, dem Vorzeichen der Frequenzverschiebung des ersten frequenzerweiterten Korrelators (14) in Bezug auf die Mittenfrequenz folgend ausgeführt wird.

3. Erfassungsverfahren nach einem der vorhergehenden Ansprüche, **dadurch gekennzeichnet, dass** es auf einem Metakanal umgesetzt wird, der aus einer Vielzahl von parallelen Kanälen besteht, und eine Code-Multikorrelation mit den Codekorrelatoren (12) der Vielzahl von Kanälen, und eine Frequenz-Multikorrelation mit den frequenzerweiterten Korrelatoren (14), die den Codekorrelatoren (12) zugeordnet sind, umsetzt.

4. Erfassungsverfahren nach einem der vorhergehenden Ansprüche, **dadurch gekennzeichnet, dass** die Summierungszeitpunkte der aufeinanderfolgenden Ergebnisse jedes frequenzerweiterten Korrelators (14) bei einer Umkehrfrequenz des Abtastzeitraums T der Ausgänge der frequenzerweiterten Korrelatoren (14) ausgewählt werden.

5. Erfassungsverfahren nach einem der vorhergehenden Ansprüche, umfassend, zu jedem der Zeitpunkte, das Bestimmen des induzierten Fehlers, wobei das Bestimmen und Übertragen der summierten Ergebnisse für frequenzerweiterte Korrelatoren (14), die jeweils um $\omega_m$ und $-\omega_m$ in Bezug auf die Mittenfrequenz verschoben sind, parallel umgesetzt werden.

6. Erfassungsverfahren nach einem der vorhergehenden Ansprüche, wobei die Frequenzverschiebung der Träger in Bezug auf die Mittenfrequenz $\omega_m = \dfrac{m}{aT}$ beträgt, worin $m \in [\text{-}M;M]$, wobei a und T reelle Zahlen und M und m ganze Zahlen sind, und wobei:

   - die Ergebnisse der Korrelation durch die Codekorrelatoren (12) in einem Zeitraum $T/M$ abgetastet werden,
   - der Ausgang eines frequenzerweiterten Korrelators (14) der Summe von M Abtastungen einer Faltung zwischen dem Ausgang des Codekorrelators (12), dem der frequenzerweiterte Korrelator (14) zugeordnet ist, und dem in Bezug auf die Mittenfrequenz frequenzverschobenen Träger entspricht.

7. Erfassungsverfahren nach dem vorhergehenden Anspruch, wobei der induzierte Fehler zu einem Zeitpunkt n x T gemäß:

$$induzierter\ Fehler(nT) = \frac{nT|\omega_m|}{f}$$

bestimmt wird, worin *n* Integrationsinkrement so, dass *n* natürliche Zahl, und *f* Skalenfaktor des Signals, definiert durch

$$f = \frac{\ddot{U}bertragungsrate\ des\ Spreizcodes\ des\ Satellitensignals\ (Momente/s)}{Frequenz\ der\ Tr\ddot{a}gerwelle\ des\ Satellitensignals\ (Hz)}.$$

8. Erfassungsverfahren nach einem der vorhergehenden Ansprüche, umfassend eine Kompensation der Dopplerverschiebung, die für die Nennfrequenz des Trägers des Satellitensignals umgesetzt wird, wobei die kompensierte Nennfrequenz der Mittenfrequenz entspricht.

9. Erfassungsverfahren nach einem der vorhergehenden Ansprüche, **dadurch gekennzeichnet, dass** das Satellitenortungssystem das globale Positionsbestimmungssystem GPS ist, wobei der Träger des von einem Satelliten stammenden Signals die so genannten L1- oder L2-Träger mit der jeweiligen Frequenz 1575,42 MHz und 1227,6 MHz sein können, wobei das Signal durch einen Spreizcode phasenmoduliert wird, der der C/A-Code oder der P(Y)-Code sein kann.

10. Empfänger eines Satellitenortungssystems, der über mehrere Kanäle verfügt, die jeder mehrere Korrelatoren (12, 14) umfassen, wobei die Kanäle mindestens einen Replikatcode-Generator (8), ein Schieberegister (10), ein Erfassungsmodul (3) zum Steuern der Kompensation der Dopplerverschiebung umfassen, wobei der Empfänger weiter dazu eingerichtet ist, das Verfahren nach einem der vorhergehenden Ansprüche umzusetzen.

**Claims**

1. Method for acquisition of a signal emitted by a satellite, by a receiver in a satellite GNSS Global Positioning System, having several channels, each comprising several code correlators (12) with which frequency-augmented correlators (14) are associated,
the method comprising steps in which:

   - code correlators (12) of a channel are used to create a multi-code correlation of the received signal (2) with replica signals successively code-shifted relative to each other by a code space,
   - frequency-augmented correlators (14) associated with a code correlator (12), are used to create a multi-frequency correlation of the result of the correlation of the code correlator (12) with carriers shifted in frequency relative to a central frequency coherent of the generation speed of the replica signal of the code correlator (12), an error being induced at the output from each frequency-augmented correlator (14) depending on the shift relative to the central frequency and the duration during which the results of the multi-frequency correlation are integrated,

   wherein the method being also includes steps according to which:

   - the successive results of each frequency-augmented correlator (14) are summated at several instants during an integration period of the results of the multi-frequency correlation,
   - if the error induced at the output from a first frequency-augmented correlator (14) expressed as an integer number of code spaces between the code correlators (12) at each of these instants has increased relative to the induced error expressed as an integer number of code spaces between code correlators (12) at the output from the same correlator (14) valid in the previous instant, then the summated results of the first frequency-augmented correlator (14) are transferred to the summated results of a second frequency-augmented correlator (14), the second frequency-augmented correlator (14) using the same frequency-shift as the first frequency-augmented correlator (14) and being associated with a second code correlator (12) that is shifted by the code space from the first code correlator (12) with which said first frequency-augmented correlator (14) is associated.

2. Acquisition method according to claim 1, in which the summated results of the frequency-augmented correlator (14) associated with the first code correlator (12) are transferred to the second frequency-augmented correlator (14) associated with the second code correlator (12), depending on the sign of the frequency-shift of the first frequency-augmented correlator (14) relative to the central frequency.

3. Acquisition method according to claim 1 wherein the method is applied on a meta-channel composed of a plurality of channels in parallel using a multi-code correlation with code correlators (12) of said plurality of channels and a multi-frequency correlation with the frequency-augmented correlators (14) associated with said code correlators (12).

4. Acquisition method according to claim 1 wherein the summation times of the successive results of each frequency-augmented correlator (14) are chosen at an inverse frequency of the sampling period T of the outputs from the frequency-augmented correlators (14).

5. Acquisition method according to claim 1 including, for each said instant, determination of the induced error, said determination and the transfer of summated results being used in parallel for frequency-augmented correlators (14) shifted by $\omega_m$ and $\omega_m$ respectively relative to the central frequency.

6. Acquisition method according to claim 1 wherein the frequency-shift of the carriers relative to the central frequency is $\omega_m = \dfrac{m}{aT}$ where $m \in [-M; M]$, in which a and T are reals and M and m integers and in which:

   - the results of the correlation by code correlators (12) are sampled at a period $T/M$,
   - the output from a frequency-augmented correlator (14) corresponds to the sum of M samples of a convolution between the output from the code correlator (12) with which the frequency-augmented correlator (14) is associated and the frequency-shifted carrier relative to the central frequency.

7. Acquisition method according to claim 6, wherein the induced error is determined at a time n x T according to:

$$induced\ error\ (nT) = \frac{nT|\omega_m|}{f}$$

where *n* is the integration increment such that *n* is a natural integer and f is a scale factor of the signal defined by

$$f = \frac{transmission\ throughput\ of\ the\ satellite\ signal\ spread\ code\ (moments/s)}{frequency\ of\ the\ satellite\ signal\ carrier\ wave\ (Hz)}$$

8. Acquisition method according to claim 1, comprising compensation for the Doppler shift used for the nominal frequency of the satellite signal carrier, said compensated nominal frequency corresponding to said central frequency.

9. Acquisition method according to claim 1, **characterised in that** the satellite positioning system is the GPS global positioning system, the carrier of said signal output from a satellite possibly being so-called carriers L1 or L2 with frequencies of 1575.42 MHz and 1227.6 MHz respectively, said signal being phase-modulated by a spread code that may be the C/A code or the P(Y) code.

10. Receiver in a satellite positioning system with several channels each comprising several correlators (12, 14), said channels comprising at least a code replica generator (8), a shift register (10) and an acquisition module (3) to control compensation for the Doppler shift, said receiver also being configured to implement the method according to any one of the previous claims.

FIG. 1

**FIG 2**

**FIG 3**

**EP 2 487 507 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **DAVID AKOPIAN.** A Fast Satellite Acquisition Method. *ION GPS 2001,* 11 Septembre 2001